(19) Europäisches Patentamt
European Patent Office
Office européen des brevets

(11) **EP 4 428 519 B1**

(12) **EUROPÄISCHE PATENTSCHRIFT**

(45) Veröffentlichungstag und Bekanntmachung des Hinweises auf die Patenterteilung:
**17.12.2025   Patentblatt 2025/51**

(21) Anmeldenummer: **23020113.9**

(22) Anmeldetag: **09.03.2023**

(51) Internationale Patentklassifikation (IPC):
**G01N 21/03** *(2006.01)*   **G01N 21/27** *(2006.01)*
**G01N 21/31** *(2006.01)*   **G01N 21/64** *(2006.01)*
**G01N 21/65** *(2006.01)*

(52) Gemeinsame Patentklassifikation (CPC):
**G01N 21/0317; G01N 21/274;** G01N 21/31;
G01N 21/645; G01N 21/65; G01N 2021/6417;
G01N 2201/1218; G01N 2201/124

(54) **VORRICHTUNG UND VERFAHREN ZUR VARIABLEN DRUCKABHÄNGIGEN ANREICHERUNG UND SPEKTROSKOPISCHEN BESTIMMUNG EINES ANALYTEN IN EINER GAS- ODER DAMPFFÖRMIGEN PROBE**

DEVICE AND METHOD FOR VARIABLE PRESSURE-DEPENDENT ENRICHMENT AND SPECTROSCOPIC DETERMINATION OF AN ANALYTE IN A GAS- OR VAPOROUS SAMPLE

DISPOSITIF ET PROCÉDÉ D'ENRICHISSEMENT VARIABLE DÉPENDANT DE LA PRESSION ET DÉTERMINATION SPECTROSCOPIQUE D'UN ANALYTE DANS UN ÉCHANTILLON GAZEUX OU VAPOREUX

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**11.09.2024   Patentblatt 2024/37**

(73) Patentinhaber: **Buck, Christian**
**64283 Darmstadt (DE)**

(72) Erfinder:
• **Buck, Christian**
**64283 Darmstadt (DE)**

• **Manhardt, Joachim**
**73569 Eschbach (DE)**

(74) Vertreter: **Benz, Jürgen**
**Heumann**
**Rechts- und Patentanwälte**
**Spessartring 63**
**64287 Darmstadt (DE)**

(56) Entgegenhaltungen:
WO-A1-01/27596      DE-U1- 202022 000 633
US-A1- 2011 147 592

**Beschreibung**

Die Erfindung betrifft eine Vorrichtung und ein Verfahren zur spektroskopischen Messung von Analyten in einer gas- oder dampfförmigen Probe. Die Erfindung betrifft weiterhin eine Vorrichtung und ein Verfahren zur qualitativen und quantitativen spektroskopischen Bestimmung von in einer Gas- oder Dampfphase vorliegenden Substanzen, beispielsweise Schadstoffen, die oft in kleinsten Mengen auftreten und daher eine hohe Anforderung an die Empfindlichkeit der optischen Messvorrichtungen stellen. Die Erfindung betrifft insbesondere eine entsprechende Vorrichtung und ein Verfahren, mit welchen die messspezifische Empfindlichkeit der Vorrichtung durch definierte vorbestimmte druckabhängige Anreicherung eines Analyten in einer gasförmigen oder dampfförmigen Probe variabel gestaltet und so den Eigenschaften des zu messenden Analyten angepasst werden kann. Damit sind auch Analysen von beispielsweise Wasserstoff, $CO_2$ ($^{14}C$-haltig) oder Spreng- und Kampstoffen möglich.

Die Spektroskopie ist eine bewährte und schnelle Methode zur qualitativen und quantitativen Analyse vieler Elemente und Verbindungen in wässriger, gasförmiger oder fester Phase. Sie basiert meist auf der Schwächung einer Strahlung durch Wechselwirkung mit Atomen und/oder Molekülen. Optische Analyseverfahren ersetzen zunehmend die konventionelle chemische Analyse von Gasen. Sie nutzen den Effekt, dass Atome und Moleküle Licht bei spezifischen Wellenlängen absorbieren und haben den Vorteil, dass die Ergebnisse schnell zur Verfügung stehen. Der Nachweis von Gasen und die Bestimmung ihrer Konzentrationen sind in situ möglich, ohne dass Proben entnommen werden müssen. Derartige Verfahren sind deshalb für transiente chemische Prozesse oder schnell strömende Gase in der Regel gut geeignet.

Die dazu verwendeten Messgeräte bestehen im Wesentlichen aus einer Lichtquelle, einer offenen oder geschlossenen Küvette, welches von dem zu vermessenden Fluid durchströmt wird, einem System aus Analysator und Detektor zur spektralen Analyse des eingestrahlten Lichts sowie einem Gerät zur Datenerfassung und -übermittlung.

Methoden und Vorrichtungen zur Bestimmung von gasförmigen Analyten sind im Stand der Technik bekannt.

Die WO 2001/27596 A1 beschreibt einen Kohlenmonoxid-Sensor zur spektroskopischen Bestimmung von Kohlenmonoxid/Kohlendioxid als Bestandteil von reformierten Gasen in

einer Messzelle durch Beaufschlagung und Variieren des Druckes des Gases in einer Messzelle. Mit dem beschriebenen System können die Gase mit großer Genauigkeit qualitativ und quantitativ bestimmt werden.

Die US 2003/0098419 A1 beschreibt eine Vorrichtung und ein Verfahren zur qualitativen und quantitativen, spektroskopischen Bestimmung von Halogengasen. Dabei wird festgestellt, dass durch Variieren des Druckes der Gas-Probe in der Messzelle oder durch Verändern der optischen Pfadlänge der Messzelle eine hohe Genauigkeit und Empfindlichkeit der Messung erreicht werden kann.

Die US 2003/0015019 A1 offenbart unter anderem eine spektroskopische Methode zur Analyse von Gasen, insbesondere unter Anwendung von "Pneumatic Focusing". Damit ist gemeint, dass die Gas-Probe vor der Messung in der Messzelle zu einem kleinerem Volumen gepresst wird, um so ein verstärktes Signal und eine höhere Empfindlichkeit zu erzielen. Weitere relevante Vorrichtungen zur spektroskopischen Analyse einer gas- oder dampfförmigen Probe unter Druckerhöhung im Probenmessraum sind offenbart in DE 20 2022 000633 U1, WO 01/27596 A1 und US 2011/147592 A1.

Die zugrundeliegenden spektroskopischen Methoden des Standes der Technik nutzen alle einen beispielsweise durch das Lambert-Beer'sche Gesetzt ausdrückbaren physikalischen Sachverhalt, der weiter unten beschrieben wird.

Als Lichtquelle werden oft Breitbandstrahler zur Messung von Molekülen oder Linienstrahler mit einer zum Analyten resonanten schmalbandigen Emissionslinie verwendet.

Die Lichtabsorption beim Durchstrahlen einer Probe hängt hauptsächlich von der Zusammensetzung / Struktur der Probe und der Frequenz des Lichts (Wellenlänge) ab.

Die Intensität des durchstrahlten Lichtes durch die Probe verändert sich proportional zum Absorptionskoeffizienten und der optischen Pfadlänge (Schichtdicke der Probe). Eine monochromatische Lichtquelle mit der Intensität $I_0$ passiert eine verdünnte Lösung einer speziellen chemischen Substanz der Schichtdicke d und resultiert in der Intensität $I_1$.

$$E_\lambda = \log_{10}\left(\frac{I_0}{I_1}\right) = \varepsilon_\lambda \cdot c \cdot d.$$

bzw. $I_1 = I_0 \times e^{-\varepsilon(x\, c\, x\, d)}$
worin bedeuten:

- $I_0$: Intensität des einfallenden Lichtstrahls
- $I_1$ : Intensität des transmittierten Lichtstrahls durch die Schichtdicke d
- d : Schichtdicke d, oder optische Pfadlänge (cm)
- c : Konzentration der absorbierenden Substanz
- $\varepsilon_\lambda$ : Molarer Extinktionskoeffizient bei spezifischer Wellenlänge $\lambda$ für diese Substanz
- $E_\lambda$ : Extinktion bei einer spezifischen Wellenlänge $\lambda$
- e : Eulersche Zahl (circa 2,72)

Der Extinktionskoeffizient $\varepsilon$ ist eine naturgegebene Materialkonstante, dessen Zahlenwert materialabhängig über viele Größenordnungen variieren kann. Die zu erfassende Konzentration c ist von der aktuellen analytischen Fragestellung abhängig und kann ebenfalls über viele Größenordnungen variieren. Im idealen Fall ist $\varepsilon$ unter kontrollierten Messbedingungen (z.B. Temperatur, Lösungsmittel, pH) also nur abhängig von der Art der absorbierenden Substanz und der Wellenlänge $\lambda$.

Wenn die optische Pfadlänge d und die chemische Substanz bekannt sind (also $\varepsilon$), kann die unbekannte Konzentration c einer Substanz durch Messung der Extinktion E bei spezifischer Wellenlänge bestimmt werden. Daraus ergibt sich, dass bei einer bestimmten Konzentration c eines bestimmten Analyten die Empfindlichkeit der Messung für ein bestimmtes Detektorsystem im Idealfall ausschließlich von der optischen Pfadlänge der durchstrahlten Probe, im Regelfall der Schichtdicke (OPL) der Messküvette, abhängt. Somit kann die Empfindlichkeit für eine bestimmte Substanz in einer Messvorrichtung bei dem gleichen Detektorsystem nur durch Erhöhung der optischen Pfadlänge, bzw. der Küvettenlänge d gesteigert werden. Entsprechende Küvetten in beliebiger Länge und aus beliebigen Materialien, welche mit entsprechend vorgefertigten und leicht anzubringenden Küvetten-Endstücken ausgestattet sind, sind im Stand der Technik bekannt. Diese Küvetten-Endstücke in Form von Normschliffkernen sind mit integrierten Ein- bzw. Auskoppeloptiken und Lichtwellenleiteranschlüssen oder Lichtquellen und Detektoren ausgestattet, so dass die Küvettenlänge leicht an das Messsystem, bzw. den zu messenden Analyten angepasst werden kann (DE 20 2012 003 739 U1).

Die Änderung der optischen Pfad- bzw. Küvettenlänge ist jedoch nicht immer möglich oder vorteilhaft, insbesondere dann, wenn z. B. für auswertbare Extinktionen bei niedrigen Analyt-Konzentrationen, die dann notwendige große Küvettenlänge aus Platzgründen oder anderen technischen Gründen nicht realisierbar ist. Umgekehrt kann es auch bei bestimmten Analyten in bestimmten Konzentrationsbereichen und bestimmten Detektorsystemen erforderlich sein, die optische Pfadlänge stark verkürzen zu müssen, um verwertbare Messergebnisse zu erhalten. Auch in diesem Fall kann einer beliebigen Verkürzung der Küvettenlänge technische Grenzen gesetzt sein.

Es bestand somit die Aufgabe der vorliegenden Erfindung, eine spektroskopische Vorrichtung und ein spektroskopisches Verfahren zur quantitativen und/oder qualitativen Messung von Analyten in einer gas- oder dampfförmigen Probe unter Verwendung einer Vorrichtung zur Verfügung zu stellen, welche nicht nur bei einer definierten Küvettenlänge in einem

vorgegebenen optischen Messsystem eine Steigerung der Empfindlichkeit bzw. der Extinktion und damit eine Senkung der Nachweisgrenze durch beispielsweise höheren Druck oder unter Druck erzeugte Volumenverkleinerung in einer Messzelle zur Folge hat, sondern über die bekannten physikalischen Zusammenhänge der betroffenen Parameter hinaus, Maßnahmen vorzuschlagen, welche zusätzlich zu einer weiteren Steigerung der Empfindlichkeit bzw. Senkung der der Nachweisgrenze oder Bestimmungsgrenze des Messsystems führen. Dabei sollen auch andere wichtige Randbedingungen beachtet werden, nämlich Volumenminimierung, Längen-Minimierung der Messzelle, Gewichtsoptimierung, einfache unempfindliche optische Anordnung, Zufuhr der Probe mit dem Analyten aus der Umgebung oder industriellen Prozessen jeglicher Art, sowie Einstellung der Empfindlichkeit auf den Arbeitsbereich des ausgewählten Analysesystems.

Die Aufgaben wurden durch die erfindungsgemäße Vorrichtung, wie sie in den Ansprüchen und im Folgenden beschrieben ist, gelöst.

Es wurde nämlich gefunden, dass die Empfindlichkeit der spektroskopischen Messung und die Nachweis-/Bestimmungsgrenze eines Analyten in einer gas- oder dampfförmigen Prozessumgebung gesteigert werden kann, wenn der zu bestimmende Analyt, ehe er in die Messzelle überführt wird, zuvor aus dem Prozess, der ihn erzeugt, durch eine Kompressor-Vorrichtung verdichtet und dabei angereichert bzw. seine Konzentration stark erhöht wird, und anschließend bzw. währenddessen mit einem über die Kompressor-Vorrichtung regulierbarem Druck in die Messzelle überführt und dort spektroskopisch qualitativ und quantitativ analysiert wird.

Gegenstand der Erfindung ist somit eine mit variabler Empfindlichkeit betreibbare Analyse-Vorrichtung zur spektroskopischen Bestimmung der chemischen, physikalischen oder physikochemischen Eigenschaften eines Analyten einer gas- oder dampfförmigen Probe, welche einer definierten Prozessumgebung entnommen wurde. Die erfindungsgemäße Vorrichtung ist in Anspruch 1 definiert und umfasst im Wesentlichen:

- eine Lichtquelle,
- einen druckstabilen Proben- Messraum (z.B. Küvette) zur Aufnahme der Probe mit dem Analyten, welcher mit dem Licht der Lichtquelle durchstahlt wird und regulierbare Einlass- und Auslassöffnungen aufweist zur Zuführung der Probe mit dem Analyten und zur variablen Druckbeaufschlagung und Druckentlastung des Proben-Messraums,
- ein mit Ein- und/oder Auskoppeloptiken oder mit anderen regulierbaren optischen oder optoelektronischer Mitteln ausgestattetes Detektorsystem, welches zur spektrometrischen Analyse des im Proben-Messraum transmittierten, reflektierten oder emittierten Lichts befähigt ist, sowie
- Vorrichtungen zur automatischen Erfassung und Auswertung der Messdaten,

wobei erfindungsgemäß die Analyse-Vorrichtung mit einer Kompressor-Vorrichtung ausgestattet ist, welcher mit einer Einlassöffnung des Proben-Messraums so verbunden ist, dass die gas- oder dampfförmige Probe mit dem enthaltenen Analyten aus der Prozessumgebung eingangsseitig angesaugt und dabei im Kompressor angereichert und ausgangsseitig mit einem voreingestellten wählbaren Druck in den Proben- Messraum überführt wird bzw. innerhalb des Messraums verdichtet wird, wodurch gleichzeitig eine entsprechende variable, dem ausgewählten oder dem verfügbaren Arbeitsbereich angepasste Anreicherung des Analyten im Proben- Messraum erzielt wird.

Im Gegensatz zum den oben genannten Dokumenten des Standes der Technik erfolgt die Druckerhöhung der zu untersuchenden Probenmenge nicht erst in oder unmittelbar vor Einleiten in die Messküvette, sondern in einer gesonderten Vorrichtung unter Einsatz eines Kompressors beliebig vor der Überführung in den eigentlichen Proben-Messraum. Damit erhält man nicht nur eine druckverdichtete Probe, welche wie im Stand der Technik beschrieben bereits aus physikalischen Gründen (Lambert-Beer) eine niedrigere Nachweisgrenze und damit höhere Empfindlichkeit initiiert, sondern darüber hinaus eine erfindungswesentliche, signifikante, apparatetechnisch sehr gut steuer- und regulierbare Anreicherung der Menge, bzw. Konzentrationserhöhung der zu bestimmenden gasförmigen Probe und damit des Analyten, welche dann steuerbar, in konzentrierterer Form als zuvor, aus der separaten Kompressor-Vorrichtung in den Proben-Messraum überführt werden kann. Somit wird für den Analyten die Nachweis- und Bestimmungsgrenze signifikant gesenkt, ohne dass das spektroskopische Messverfahren optimiert oder verändert werden müsste.

Erfindungsgemäß umfasst die Kompressor-Vorrichtung mindestens einen Sammel- oder Vorratsbehälter, welcher eingangsseitig über mindestens eine erste regulierbare Zuführung eine gas- oder dampfförmigen Probe mit dem zu bestimmenden Analyten direkt aus der ihn erzeugenden Prozessumgebung aufnimmt und zwischenspeichert und ausgangsseitig über mindestens eine zweite regulierbare Zuführung die Kompressor-Vorrichtung mit der zwischengespeicherten Probe mit dem Analyten speist.

Aus der Kompressor-Vorrichtung kann die so, mit Druck beaufschlagte gas- oder dampfförmige Probe mit dem gleichzeitig angereicherten Analyten, nunmehr durch mechanische oder elektronische Ventile gezielt und regulierbar in den Proben-Messraum überführt und spektroskopisch analysiert werden.

Mit dieser Vorrichtung kann somit auch der Arbeitsbereich des betreffenden zu bestimmenden Analyten in Bezug auf das gewählte Messsystem und die vorliegenden Messbedingungen auf einfache Art und Weise durch gezielte Druckänderung bestimmt werden.

Gegenstand der Erfindung ist somit auch ein Verfahren zur Steigerung der Empfindlichkeit einer spektroskopischen Messung gemäß Anspruch 8.

Beschrieben wird auch ein Verfahren zur spektroskopischen qualitativen und/oder quantitativen Bestimmung eines Analyten in einer gasförmigen oder auch dampfförmigen Probe für ein definiertes spektroskopisches Messsystem mit Hilfe dieser Vorrichtung, wobei man durch gezielte Druckänderung über die Kompressor-Vorrichtung die Konzentration der angereicherten Probe und somit des angereicherten Analyten in dem Proben-Messraum so lange verändert, bis die Nachweis- oder Bestimmungsgrenze des Analyten erreicht und der Analyt somit bestimmbar ist.

Durch Auffinden der maximalen oberen und unteren Konzentration des Analyten kann somit der Arbeitsbereich der spektroskopischen Messung für diesen Analyten für das gewählte Messsystem und unter den gewählten Messbedingungen durch einfache Druckänderung über bzw. durch die Kompressor-Vorrichtung bestimmt werden.

Mit Hilfe der erfindungsgemäßen Vorrichtung kann auch die spektroskopische Bestimmung eines Analyten sehr einfach einer Kalibrierung in Bezug auf ein gegebenes Messsystem unterworfen werden.

Beschrieben wird daher auch die Verwendung der hier beschriebenen erfindungsgemäßen Vorrichtung zur Kalibrierung einer spektroskopischen Messung der Konzentration eines zu bestimmenden Analyten in einer gas- oder dampfförmigen Probe in einer gewählten Messumgebung, unter Einbeziehung von insbesondere Druck, Temperatur, Länge des Proben-Messraums und Art des Analyten, indem man den möglichen

Arbeitsbereich des Messsystems durch Konzentrationsänderungen der Probe bzw. des Analyten in dem Proben-Messraum mittels gezielter Druckänderung durch die Kompressor-Vorrichtung bestimmt.

Unter dem Begriff "Analyt" wird erfindungsgemäß eine in einer gas- oder dampfförmigen Probe vorhandene (oder ggf. nicht-vorhandene) zu bestimmende Substanz verstanden, welche üblicherweise neben anderen nicht zur Messung vorgesehenen Stoffen (Matrix) in der Probe vorliegt. Diese Substanz kann ein Atom, ein Molekül oder eine komplexere chemische Verbindung in Gas- oder in Partikelform sein.

Unter dem Begriff "Bestimmungsgrenze" wird erfindungsgemäß die kleinste Konzentration eines Analyten, die quantitativ mit einer festgelegten Präzision bestimmt werden kann, verstanden. Erst oberhalb der Bestimmungsgrenze werden quantitative Analysenergebnisse angegeben. Die Bestimmungsgrenze hat immer eine höhere Genauigkeit als die Nachweisgrenze.

Der Begriff "Nachweisgrenze" bezeichnet erfindungsgemäß den extremen Wert eines Messverfahrens, bis zu dem die Messgröße gerade noch zuverlässig nachgewiesen werden kann.

Unter dem Begriff "Arbeitsbereich" wird erfindungsgemäß der Bereich zwischen der unteren und oberen Konzentration einer Qualitätssicherungs-Analyse, bei dem der Messfehler noch im toleranten Rahmen liegt, verstanden.

Unter dem Begriff "Prozessumgebung" sind erfindungsgemäß die Bedingungen zu verstehen, unter denen die Probe und der zu bestimmende Analyt gebildet, verarbeitet und/oder analysiert wird oder wurde. Diese Bedingungen können nicht nur physikalischer Natur sein, sondern beispielsweise auch Umwelteinflüsse (z.B. Schadstoffbelastungen) umfassen.

Unter Verwendung einer erfindungsgemäßen Kompressor-Vorrichtung mit vorgeschaltetem Vorratsbehälter sind also folgende Möglichkeiten gegeben:

- Druckerhöhung
- Ggf. Druckminderung
- Druckregelung
- Durchflussregelung
- Zufuhr der Probe mit dem Analyten über Zwischenbehälter erlaubt Unabhängigkeit von Prozessbedingungegen (Bsp. Prozess hat 0,6 MPa (6 bar), Messzelle 5 MPa (50 bar), oder umgekehrt, Prozess hat 8 MPa (80 bar), der Arbeitsbereich ist optimal bei 3 MPa (30 bar))
- Anreicherung
- Einstellung der Empfindlichkeit auf den Arbeitsbereich des Analysesystems über den vorgewählten Druck

Wie bereits erwähnt, bietet die erfindungsgemäße Vorrichtung eine elegante und einfache Möglichkeit der Kalibrierung eines Messsystems in Abhängigkeit eines mehrdimensionalen Kennfeldes, beispielsweise umfassend Parameter wie Temperatur, Druck, Längenausdehnung des Proben-Messraums und Konzentration des Analyten. Bei kalibrierungsabhängigen Messtechniken ist die Kenntnis der variablen Parameter, wie Druck. Temperatur, Konzentration auf die Messung unerlässlich. Insbesondere bei Verwendung einer erfindungsgemäßen Kompressor-Vorrichtung kommt dem Verhältnis Druck zu Konzentrationsanreicherung eine besondere Rolle zu.

Das Verfahren bietet also - in seiner Spektroskopie gestützten Ausführung - die Möglichkeit, für einen ausgewählten Analyten innerhalb einer festgelegten Ausführung des Messsystems (Systemaufbau bestehend aus Lichtquelle, Detektor, OPL Messzelle, etc.) durch Anpassung der Laufzeit und Leistung des Kompressors und dem damit erzeugten Druck eine optimale Einstellung für dieses Messsystem aufzufinden, die es ermöglicht,

- die Nachweis- und Bestimmungsgrenze durch Anpassung des Drucks zu ermitteln und einzustellen sowie

- den Arbeitsbereich des vorgesehenen Messsystems an den vorgewählten Druck anzupassen und zu optimieren, wobei

der Druck so eingestellt wird, dass der Arbeitsbereich sich innerhalb des Gültigkeitsbereichs des Lambert Beer-Gesetzes befindet oder sich über einfache Methoden linearisieren lässt.

Nach Ermittlung und nachfolgender Festlegung der entsprechenden Parameter kann dann innerhalb dieses optimierten Arbeitsbereichs operiert werden.

Weitere messtechnisch relevante Koordinaten entstehen, wenn der Analyt oder Teile der Matrix in der Lage sind, chemische Reaktionen einzugehen wie z. B. Kohlendioxid und Wasser unter Bildung von Kohlensäure, oder unter bestimmten Bedingungen zu kondensieren. Um diese letztgenannten möglichen Effekte und Ereignisse messtechnisch zu berücksichtigen, ist es bei den meisten bekannten Methoden oft zwingend erforderlich, der eigentlichen Analyse einen Trennprozess wie z. B. Gaschromatographie vorzuschalten. Durch das erfindungsgemäße Verfahren können solche aufwendigen Vorbehandlungen in einem größeren Ausmaß als mit konventioneller Technik vermieden werden.

Weiterhin zu berücksichtigen sind insbesondere solvatochrome Effekte, welche sich sowohl aus der Zusammensetzung einer Probe als auch aus den einfachen Variablen ergeben. Es ist an sich bekannt, dass der Druck innerhalb einer Probe Einfluss (z. B. Lorenzverbreiterung) auf das spektrale Absorptions- und Emissionsverhalten der in der Probe enthaltenen Teilchen hat, was normalerweise unter anderem bei einer Kalibration des verwendeten Messgeräts mit berücksichtigt werden muss. Solvatochrome Effekte sind in der Wissenschaft bisher weder für die Koordinaten von Zusammensetzungen noch für der Einfluss des Druckes exakt vorhersagbar. Hinzu kommt die Konzentrationsänderung durch die Anreicherung. Deshalb muss jedes Mal vollständig für jede einzelne Applikation das Kalibrierungs-Modell ermittelt

werden. Diese Erfindung erlaubt es, diese Effekte darüber hinaus zu einer Empfindlichkeitsänderung zu nutzen.

Natürlich besteht auch weiterhin die Möglichkeit, die optische Pfadlänge und damit die Küvettenlänge bei konstant gehaltener Empfindlichkeit deutlich kürzer gestalten zu können. Die erfindungsgemäße Vorrichtung besitzt vorzugsweise eine Lichtquelle mit einem Wellenlängenbereich von vorzugsweise 180 - 2700 nm. Die Lichtquelle kann Lichtleiter und entsprechende Optiken mit einschließen. In einer Ausführung der Erfindung können die Lichtleiteranschlüsse durch geeignete integrierte Lichtquellen bzw., gegenüberliegend, durch integrierte Detektoren ersetzt sein. Als Detektorsystem können Absorptions- oder Emissions-Spektrometer für sichtbares Licht, oder für IR-, UV- oder Röntgenstrahlung, oder auch Raman-Spektrometer vorgesehen werden.

Als Optiken können Ein- und/oder Auskoppeloptiken oder andere optische oder optoelektronische Mittel zur Optimierung und Regelbarkeit des den Probenraum durchquerenden Lichts eingesetzt werden. Derartige optische Mittel sind an sich im Stand der Technik bekannt. Mittels Systemkalibrierung, unter Benutzung definierter Standards (z.B. optischen Filtern oder Trübungsstandards) oder mittels in ihren Eigenschaften bekannten Referenzproben kann die erfindungsgemäße Vorrichtung für qualitative und quantitative Analysen genutzt werden.

Das Messfluid wird durch geeignete regulierbare Prozessanschlüsse geführt, welche vorzugsweise an gegenüberliegenden Enden des druckstabilen Messraums angebracht sind. Dazu ist zweckmäßigerweise eine Vorrichtung zur vorzugsweise automatischen Bereitstellung des Analyten und / oder zur Erhöhung der Analyt-Konzentration in der zu messenden Probe vorzusehen. Die Prozessanschlüsse, bzw. die Vorrichtung zur Bereitstellung des gasförmigen Analyten sind erfindungsgemäß mit einer Druck erzeugenden Einrichtung, beispielsweise mit einem im Stand der Technik üblichen Kompressor oder einem Pneumatik-Zylinder verbunden.

Der Proben-Messraum der erfindungsgemäßen Vorrichtung ist vorzugsweise ein dünnes Rohr oder eine Kapillare, vorzugsweise aus Stahl oder einem anderen entsprechend druckstabilen Material, in der Regel mit einer beliebigen Länge, beispielsweise von 5 - 2000 cm, vorzugsweise 10 - 300 cm. Die Rohre, sowie die optischen und weiteren Anschlüsse sollten druckmäßig so ausgelegt sein, dass Drücke > 1 MPa (10 bar), vorzugsweise > 2 MPa (20 bar), oder auch > 20 MPa (200 bar) möglich sein können. Auch können mehrerer Rohre druckdicht hintereinander geschaltet werden, um beispielsweise mehrere Messaufgaben gleichzeitig lösen zu können.

Es ist vorteilhaft, als Proben-Messraum dünne Rohre oder Kapillaren mit vorgefertigten Endstücken zu verwenden. In ihrer einfachsten Ausführung bestehen diese Endstücke aus einem Konus, innerhalb dessen eine Lichtleiterkupplung und eine Ein- bzw. Auskoppeloptik eingebaut ist. Beispielsweise können zwei dieser Koni, ein erster mit Lichtleiteranschluss und Einkoppeloptik und ein zweiter mit Lichtleiteranschluss und Auskoppeloptik, mit den vorderen bzw. hinteren Hülsen eines Rohres mit zur Messaufgabe passender Länge verbunden werden. Lichtleiteranschlüsse können dann in bekannter Art und Weise mit einer Lichtquelle bzw., auf gegenüberliegender Seite, mit einem Detektor (z. B. Spektrometer) gekoppelt werden. Vorzugsweise besitzen die Koni Normschliff- Kernabmessungen (z. B. NS 29/32) mit entsprechenden Normschliff- Hülsen, sodass ggf. mehrere druckstabile Rohre hintereinander gesteckt werden und druckdicht verspannt werden und so das Messsystem komplettieren.

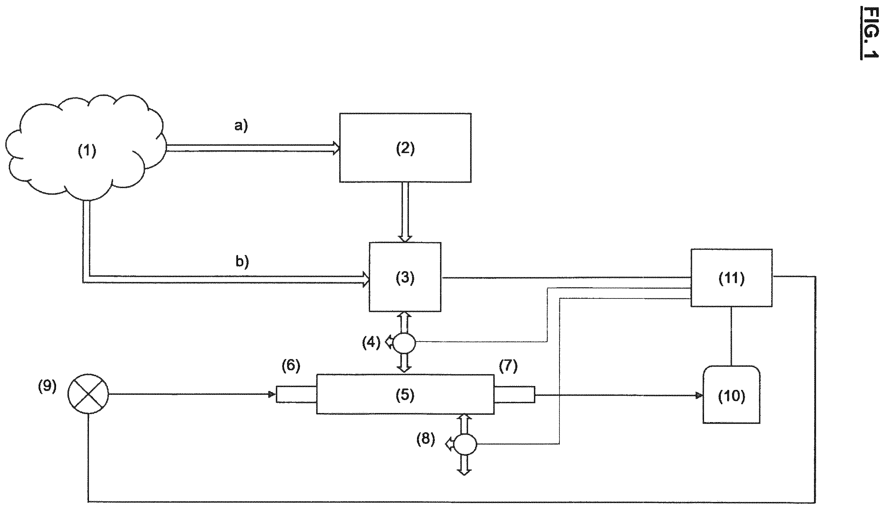

FIG. 1 zeigt schematisch den Aufbau einer Ausführungsform der erfindungsgemäßen Vorrichtung einschließlich Kompressor-Vorrichtung zur Anreicherung einer gasförmigen Probe, bzw. eines in dieser enthaltenen Analyten und dessen spektroskopischer Bestimmung. Die Kompressor-Vorrichtung umfasst den eigentlichen Kompressor und einen mit diesem verbundenen Vorratsbehälter.

Außerhalb des Gegenstandes der vorliegenden Erfindung, wird eine gasförmige Probe mit dem Analyten (1) aus einer Prozessumgebung (z.B. Raumluft, Atemluft, industrielle Gase, Abgase, sonstige Gase) in einen Kompressor (3) geleitet bzw. von diesem angesaugt (Pfeil b). Erfindungsgemäß wird die Probe mit dem zu bestimmenden Analyten in einen vorgeschalteten Vorratsbehälter (2) eingespeist und dort gesammelt. (Pfeil a) bis eine ausreichende Menge zur Kompression zur Verfügung steht. Aus der Kompressor-Vorrichtung wird die so angereicherte Probe, bzw. der so angereicherte Analyt über ein Einlassventil (4) in einen röhrenförmigen Proben-Messraum (5) von definierter optischer Länge, vorzugsweise aus Stahl, geleitet, welcher mit optischen Anschlüssen (Ein- und Auskoppeloptiken 7, 8), einer Lichtquelle (9) und einem Detektor (10) ausgestattet ist. Die Lichtwege sind durch schmale Pfeile angegeben. Ferner ist eine Steuerungs- und Auswertungseinheit (11) vorgesehen, z.B. ein mit einer Kontroll- und Steuersoftware und Datenleitungen ausgestatteter Computer.

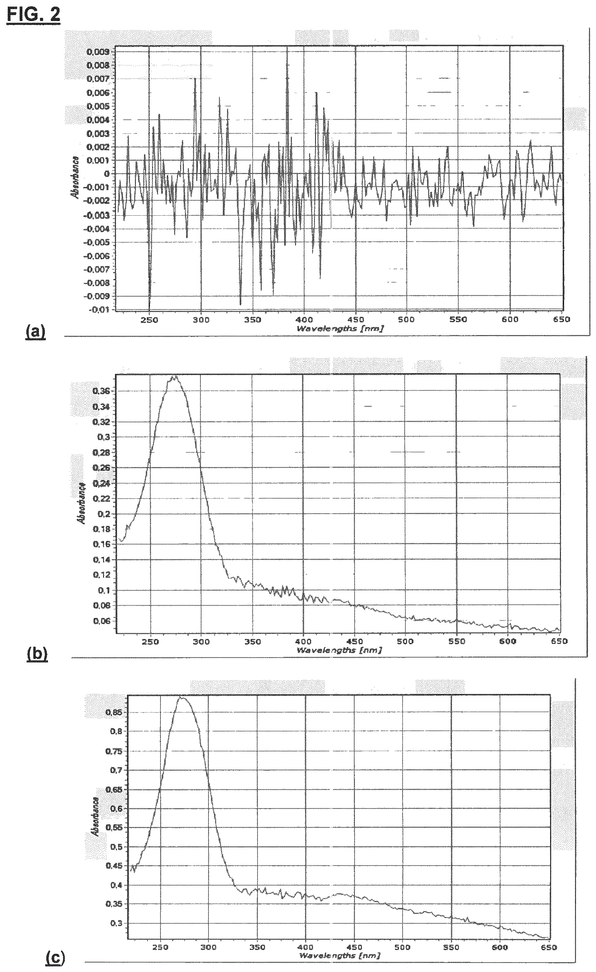

Fig. 2 (a) zeigt die Absorption von Aceton in einer gasförmigen Probe unter Normaldruck in einem Wellenlängenbereich von ca. 250 nm bis 600 nm ohne Einsatz der erfindungsgemäßen Vorrichtung.

Im Vergleich hierzu wird mittels der erfindungsgemäßen Vorrichtung, wie beschrieben, Aceton haltiges Gas aus einem Vorlagebehälter angesaugt und unter einem Druck von 3 bar (b) und 5 bar (c) in eine Messzelle / Proben-Messraum eingespeist.

Gezeigt wird, wie sich über die Laufzeit und den eingestellten Druck das Signal von Aceton bei der mit Anreicherung einhergehenden Druckerhöhung verhält. Bei P = 0,3 MPa (3 bar) ist Aceton bereits gut erkennbar und wäre durch Expression seines Peaks sicher auswertbar. Bei P = 0,5 MPa (5 bar) berist Aceton sehr gut ausgeprägt und sehr gut auswertbar un dies in einem optimalen (proportionalen) Bereich.

Die Spektren (a), (b) und (c) zeigen, wie über eine geeignete Druckeinstellung der optimale Empfindlichkeitsbereich eingestellt werden kann. Es ist selbsterklärend, dass die Druckeinstellung präzise sein muss, und vorzugsweise eine druckabhängige Kalibration in dem definierten Messsystem vorzunehmen ist.

Die Empfindlichkeitssteigerung durch Druckerhöhung und Anreicherung, die mit dem Einsatz eines Kompressors erfindungsgemäß erreicht werden kann, zeigt sich durch den Vergleich mit den Ergebnissen aus der eingangs zitierten US 2003/0015019 A1, welche die Messung von Aceton in Raumluft in einer UV/VIS Messzelle zum Gegenstand hat (siehe dort insbesondere Fig. 45, 46 und 49). Bei diesem Versuch des Standes der Technik wird zwar ein Kompressor eingesetzt, jedoch nur zur Druckerhöhung durch reine Verdrängung vorhandener Gasmenge und nicht zur gezielten Anreicherung, wie dies durch die hier beschriebene erfindungsgemäße Vorrichtung und das hier beschriebene Verfahren möglich ist.

Der Unterschied ist signifikant: Um eine Verdopplung eines Signals von ausreichender Signalgüte zu erhalten muss nach der genannten US-Anmeldung eine Druckerhöhung von 500 psi (entspricht 3,437 MPa oder 34,37 bar) vorgenommen werden (Fig. 46). Im Gegensatz hierzu wird im hier beschriebenen erfindungsgemäßen System mittels Anreicherung nur eine Druckerhöhung von 2 bar, nämlich von 3 auf 5 bar, benötigt, um ein ähnlich gutes Signal zu erhalten. Die Schichtdicke (OPL) in der Messzelle beeinflusst dabei nur sekundär die Signalgüte. Die Detektionsuntergrenze wird hauptsächlich vom gewählten Druck und der damit verbundenen Anreicherung des Analyten in der Probe mittels Kompressors bestimmt. Dies bedeutet, dass schon bei ca. einem Zehntel Druck ein ähnliche gutes Signal im Vergleich zum Stand der Technik erreicht wird (Vergleich zwischen FIG 46 der US 2003/0015019 A1 und Fig 2 dieser Erfindung).

Betrachtet man die Empfindlichkeit, dann wird in der US 2003/0015019 A1 beschrieben, dass bei einer Druckerhöhung um weitere 500 psi (entspricht 3,437 MPa oder 34,37 bar) eine Verdoppelung der Intensität erreicht wird, während das mit der beschriebenen erfindungsgemäßen Methode bereits mit weniger als 2 bar Druckerhöhung erreicht wird. Im Vergleich ist somit auch die Steigerung der Empfindlichkeit und damit auch die erreichbare untere Nachweisgrenze der erfindungsgemäßen Methode hervorzuheben.

Das Beispiel "Aceton" zeigt, dass bei einer Drucksteigerung einschließlich Anreicherung über einen Kompressor gemäß der Erfindung eine signifikante Steigerung der Empfindlichkeit erreicht werden kann.

## Patentansprüche

1. Mit variabler Empfindlichkeit betreibbare Vorrichtung zur spektroskopischen Bestimmung der chemischen, physikalischen oder physikochemischen Eigenschaften eines Analyten als Bestandteil einer gas- oder dampfförmigen Probe, welche einer vorgegebenen Prozessumgebung entnommen wurde, umfassend:

   - eine Lichtquelle (9),
   - einen druckstabiler Proben-Messraum (5) zur Aufnahme der Probe mit mindestens einem zu bestimmenden Analyten, welche mit dem Licht der Lichtquelle (9) durchstrahlt wird,
   - ein mit Ein- und/oder Auskoppeloptiken oder mit anderen regulierbaren optischen oder optoelektronischer Mitteln (7, 8) ausgestattetes Detektorsystem (10), welches zur spektrometrischen Analyse des im Proben-Messraum (5) transmittierten, reflektierten oder emittierten Lichts befähigt ist, sowie
   - Vorrichtungen zur automatischen Erfassung und Auswertung der Messdaten (11), sowie
   - eine Kompressor-Vorrichtung, welche mit einer Einlassöffnung des Proben-Messraums (5) verbunden ist,
   wobei der Proben-Messraum (5) regulierbare Einlass- und Auslassöffnungen aufweist zur Zuführung der Probe mit dem Analyten und zur variablen Druckbeaufschlagung und Druckentlastung des Proben-Messraums (5),
**dadurch gekennzeichnet, dass** die Kompressor-Vorrichtung einen Kompressor (3) und mindestens einen Sammel- oder Vorratsbehälter (2) aufweist, welcher eingangsseitig über eine erste regulierbare Zuführung eine Probe des gas- oder dampfförmigen Analyten direkt aus der Prozessumgebung (1) aufnimmt und zwischenspeichert und ausgangsseitig über eine zweite regulierbare Zuführung den Kompressor (3) mit der zwischengespeicherten Probe mit dem zu bestimmenden Analyten speist, wobei der Kompressor (3) dafür vorgesehen ist, die aus dem Sammel- oder Vorratsbehälter (2) angesaugte gas- oder dampfförmige Probe mit dem Analyten mit einem voreingestellten wählbaren Druck unter Verdichtung anzureichern und nach erfolgter Anreicherung über mechanische oder elektronische Ventile gezielt und regulierbar in den Proben-Messraum (5) zu überführen, wodurch gleichzeitig eine entsprechende variable, dem ausgewählten oder dem verfügbaren Arbeitsbereich angepasste Konzentrationserhöhung des Analyten im Proben-Messraum (5) erzielt wird..

2. Vorrichtung nach Anspruch 1, **dadurch gekennzeichnet, dass** der Proben-Messraum (5) in Form einer röhrenförmigen Messzelle gestaltet ist, welche für Drucke von 10 kPa bis mindestens 200 MPa geeignet ist.

3. Vorrichtung nach Anspruch 2, **dadurch gekennzeichnet, dass** der Proben-Messraum (5) eine definierte Länge von 3 bis 300 cm aufweist.

4. Vorrichtung nach einem der Ansprüche 1 - 3, **dadurch gekennzeichnet, dass** Lichtquelle (9) und Detektorsystem (10) mit Lichtleitern (7,8) ausgestattet sind.

5. Vorrichtung nach einem der Ansprüche 1 - 4, **dadurch gekennzeichnet, dass** als breitbandige Lichtquelle (9) Licht mit einem Wellenlängenbereich von 160 - 35000 nm vorgesehen ist.

6. Vorrichtung nach einem der Ansprüche 1 - 5, **dadurch gekennzeichnet, dass** als Detektorsystem (10) ein Raman-Spektrometer, ein Fluoreszenzspektrometer oder ein Absorptions- oder Emissions-Spektrometer für sichtbares Licht, oder für IR-, UV- oder Röntgenstrahlung vorgesehen ist.

7. Vorrichtung nach einem der Ansprüche 1 - 6, **dadurch gekennzeichnet, dass** die gas- oder dampfförmige Probe mit dem zu bestimmenden Analyten Teil eines Schutzgases oder von Luft ist.

8. Verfahren zur Steigerung der Empfindlichkeit einer spektroskopischen Messung und damit der Absenkung der Nachweis- und Bestimmungsgrenze eines Analyten in einer gasförmigen oder dampfförmigen Probe mittels einer Vorrichtung; welche umfasst

 - eine Lichtquelle (9),
 - einen druckstabilen, mit regulierbaren Einlass- und Auslassöffnungen versehenen Proben-Messraum (5) zur Aufnahme der Probe, welche mit dem Licht der Lichtquelle (9) durchstahlt wird,
 - ein mit Ein- und/oder Auskoppeloptiken oder mit anderen regulierbaren optischen oder optoelektronischer Mitteln (7, 8) ausgestattetes Detektorsystem (10), welches zur spektrometrischen Analyse des im Proben-Messraum (5) transmittierten, reflektierten oder emittierten Lichts befähigt ist,
 - Vorrichtungen zur automatischen Erfassung und Auswertung der Messdaten (11), sowie
 - eine Kompressor-Vorrichtung, welche mit einer Einlassöffnung des Proben-Messraums (5) verbunden ist,

 **dadurch gekennzeichnet , dass** die Kompressor-Vorrichtung einen Kompressor (3) und mindestens einen Sammel- oder Vorratsbehälter (3) umfasst, und

 dass die Probe des gas- oder dampfförmigen Analyten aus einer Prozessumgebung (1) in den Sammel- oder Vorratsbehälter (2) einbringt und mit Hilfe des Kompressors (3) mit einem voreingestellten wählbaren Druck unter Verdichtung anreichert und nach Anreicherung über mechanische oder elektronische Ventile gezielt, regulierbar und in konzentrierter Form in den Proben-Messraum (5) überführt und spektroskopisch analysiert.

9. Verfahren nach Anspruch 8, **dadurch gekennzeichnet, dass** man die Konzentration der angereicherten Probe durch gezielte Druckänderung über die Kompressor-Vorrichtung (3) vor der Überführung in den Probenmessraum (5) so lange verändert, bis die Nachweis- oder Bestimmungsgrenze des Analyten erreicht, und der Analyt somit bestimmbar ist.

10. Verfahren nach Anspruch 9, **dadurch gekennzeichnet, dass** der Arbeitsbereich der spektroskopischen Messung für dien Analyten in der Probe und für das gewählte Messsystem und die gewählten Messbedingungen durch Auffinden der maximal oberen und unteren Konzentration des Analyten bestimmt wird.

11. Verfahren nach einem der Ansprüche 8 - 10, **dadurch gekennzeichnet, dass** ein Proben-Messraum (5) eingesetzt wird, welcher in Form einer röhrenförmigen Messzelle mit einer definierten Länge von 3 bis 300 cm gestaltet ist und für Drucke von 10 kPa bis mindestens 200 MPa geeignet ist.

12. Verfahren nach einem der Ansprüche 8 - 11, **dadurch gekennzeichnet, dass** eine Lichtquelle (9) und ein Detektorsystem (10) mit Lichtleitern (7,8) eingesetzt wird.

13. Verfahren nach einem der Ansprüche 8 - 12, **dadurch gekennzeichnet, dass** als breitbandige Lichtquelle (9) Licht mit einem Wellenlängenbereich von 160 - 35000 nm eingesetzt wird.

14. Verfahren nach einem der Ansprüche 8 - 13, **dadurch gekennzeichnet, dass** als Detektorsystem (10) ein Raman-Spektrometer, ein Fluoreszenzspektrometer oder ein Absorptions- oder Emissions-Spektrometer für sichtbares Licht, oder für IR-, UV- oder Röntgenstrahlung eingesetzt wird.

15. Verfahren nach einem der Ansprüche 8 - 14, **dadurch gekennzeichnet, dass** die gas- oder dampfförmige Probe mit dem zu bestimmenden Analyten Teil eines Schutzgases oder von Luft ist.

## Claims

1. Device operable with variable sensitivity for spectroscopically determining the chemical, physical or physicochemical properties of an analyte as a component of a gaseous or vaporous sample taken from a predetermined process environment, comprising:

 - a light source (9),
 - a pressure-stable sample-measuring chamber (5) for receiving the sample containing at least one analyte to be determined, which sample is irradiated with the light from the light source (9),
 - a detector system (10) which is equipped with input and/or output coupling optics or with other adjustable optical or optoelectronic means (7, 8), and is capable of spectrometrically analyzing the light transmitted, reflected or emitted in the sample-measuring chamber (5), and
 - devices for automatically capturing and evaluating the measurement data (11), and
 - a compressor device connected to an inlet opening of the sample-measuring chamber (5),

 the sample-measuring chamber (5) having adjustable inlet and outlet openings for supplying the sample containing the analyte and for variable pressurization and pressure relief of the sample-measuring chamber (5),
 **characterized in that** the compressor device comprises a compressor (3) and at least one collection or storage container (2), which, on the inlet side, receives a sample of the gaseous or vaporous analyte directly from the process environment (1) via a first adjustable feed and temporarily stores said sample, and, on the outlet side, supplies the compressor (3) with the temporarily stored sample containing the analyte to be determined via a second adjustable feed,

the compressor (3) being provided for enriching the gaseous or vaporous sample containing the analyte, which is drawn from the collection or storage container (2), under compression with a preset selectable pressure and, after enrichment has taken place, for transferring the sample via mechanical or electronic valves in a targeted and adjustable manner into the sample-measuring chamber (5), whereby a corresponding variable increase in concentration of the analyte in the sample-measuring chamber (5) is simultaneously achieved, which increase is adapted to the selected or available working range.

2. Device according to claim 1, **characterized in that** the sample-measuring chamber (5) is designed in the form of a tubular measuring cell which is suitable for pressures from 10 kPa to at least 200 MPa.

3. Device according to claim 2, **characterized in that** the sample-measuring chamber (5) has a defined length of 3 to 300 cm.

4. Device according to any of claims 1 - 3, **characterized in that** the light source (9) and detector system (10) are equipped with optical waveguides (7, 8).

5. Device according to any of claims 1 - 4, **characterized in that** light having a wavelength range of 160 - 35000 nm is provided as a broadband light source (9).

6. Device according to any of claims 1 - 5, **characterized in that** a Raman spectrometer, a fluorescence spectrometer or an absorption or emission spectrometer for visible light, or for IR, UV or X-ray radiation, is provided as the detector system (10).

7. Device according to any of claims 1 - 6, **characterized in that** the gaseous or vaporous sample containing the analyte to be determined is a portion of a protective gas or of air.

8. Method for increasing the sensitivity of a spectroscopic measurement and thus lowering the detection and determination limit of an analyte in a gaseous or vaporous sample by means of a device; which comprises

- a light source (9),
- a pressure-stable sample-measuring chamber (5), provided with adjustable inlet and outlet openings, for receiving the sample which is irradiated with the light from the light source (9),
- a detector system (10) which is equipped with input and/or output coupling optics or with other adjustable optical or optoelectronic means (7, 8), and is capable of spectrometrically analyzing the light transmitted, reflected or emitted in the sample-measuring chamber (5),
- devices for automatically capturing and evaluating the measurement data (11), and
- a compressor device connected to an inlet opening of the sample-measuring chamber (5),

**characterized in that** the compressor device comprises a compressor (3) and at least one collection or storage container (3), and

**in that** the sample of the gaseous or vaporous analyte from a process environment (1) is introduced into the collection or storage container (2) and enriched under compression by means of the compressor (3) with a preset selectable pressure, and, after enrichment, is transferred via mechanical or electronic valves in a targeted, adjustable manner and in a concentrated form into the sample-measuring chamber (5) and analyzed spectroscopically.

9. Method according to claim 8, **characterized in that** the concentration of the enriched sample is changed by a targeted pressure change by means of the compressor device (3), before transfer into the sample-measuring chamber (5), until the detection or determination limit of the analyte is reached and the analyte can thus be determined.

10. Method according to claim 9, **characterized in that** the working range of the spectroscopic measurement for the analytes in the sample and for the selected measuring system and the selected measuring conditions is determined by finding the maximum upper and lower concentration of the analyte.

11. Method according to any of claims 8 - 10, **characterized in that** a sample-measuring chamber (5) is used, which is designed in the form of a tubular measuring cell having a defined length of 3 to 300 cm and is suitable for pressures from 10 kPa to at least 200 MPa.

**12.** Method according to any of claims 8 - 11, **characterized in that** a light source (9) and a detector system (10) having optical waveguides (7, 8) are used.

**13.** Method according to any of claims 8 - 12, **characterized in that** light having a wavelength range of 160 - 35000 nm is used as a broadband light source (9).

**14.** Method according to any of claims 8 - 13, **characterized in that** a Raman spectrometer, a fluorescence spectrometer or an absorption or emission spectrometer for visible light, or for IR, UV or X-ray radiation, is used as the detector system (10).

**15.** Method according to any of claims 8 - 14, **characterized in that** the gaseous or vaporous sample containing the analyte to be determined is a portion of a protective gas or of air.

**Revendications**

**1.** Dispositif pouvant fonctionner avec une sensibilité variable pour la détermination spectroscopique des propriétés chimiques, physiques ou physicochimiques d'un analyte en tant que constituant d'un échantillon sous forme de gaz ou de vapeur, lequel a été prélevé dans un environnement de traitement prédéfini, comprenant :

- une source de lumière (9),
- un espace de mesure d'échantillon (5) stable en pression pour la réception de l'échantillon comportant au moins un analyte à déterminer, lequel espace de mesure d'échantillon est traversé par la lumière de la source de lumière (9),
- un système de détection (10) équipé d'optiques d'entrée et/ou de sortie ou d'autres moyens optiques ou optoélectroniques réglables (7, 8), lequel système de détection est capable d'analyser par spectrométrie la lumière transmise, réfléchie ou émise dans l'espace de mesure d'échantillon (5), ainsi que
- des dispositifs pour la saisie et l'évaluation automatiques des données de mesure (11), ainsi que
- un dispositif de compression qui est raccordé à une ouverture d'entrée de l'espace de mesure d'échantillon (5),

dans lequel l'espace de mesure d'échantillon (5) présente des ouvertures d'entrée et de sortie réglables pour l'alimentation avec l'échantillon comportant l'analyte et pour la mise sous pression et la décharge de pression variables de l'espace de mesure d'échantillon (5),

**caractérisé en ce que** le dispositif de compression présente un compresseur (3) et au moins un récipient de collecte ou de réserve (2) qui, côté entrée, reçoit et stocke temporairement, par l'intermédiaire d'une première alimentation réglable, un échantillon de l'analyte sous forme de gaz ou de vapeur directement à partir de l'environnement de traitement (1) et, côté sortie, alimente le compresseur (3) avec l'échantillon stocké temporairement comportant l'analyte à déterminer, par l'intermédiaire d'une seconde alimentation réglable,
dans lequel le compresseur (3) est prévu pour enrichir l'échantillon sous forme de gaz ou de vapeur comportant l'analyte, aspiré à partir du récipient de collecte ou de réserve (2), avec une pression préréglée sélectionnable en le comprimant et, une fois l'enrichissement effectué, pour le transférer de manière ciblée et réglable dans l'espace de mesure d'échantillon (5) par l'intermédiaire de soupapes mécaniques ou électroniques, moyennant quoi une augmentation de concentration variable correspondante de l'analyte est obtenue simultanément dans l'espace de mesure d'échantillon (5), laquelle augmentation de concentration est adaptée à la plage de travail sélectionnée ou disponible.

**2.** Dispositif selon la revendication 1, **caractérisé en ce que** l'espace de mesure d'échantillon (5) est réalisé sous forme de cellule de mesure tubulaire qui convient pour des pressions allant de 10 kPa à au moins 200 MPa.

**3.** Dispositif selon la revendication 2, **caractérisé en ce que** l'espace de mesure d'échantillon (5) présente une longueur définie allant de 3 à 300 cm.

**4.** Dispositif selon l'une des revendications 1 à 3, **caractérisé en ce que** la source de lumière (9) et le système de détection (10) sont équipés de fibres optiques (7, 8).

**5.** Dispositif selon l'une des revendications 1 à 4, **caractérisé en ce qu'**une lumière comportant une gamme de longueurs d'onde allant de 160 à 35 000 nm est prévue comme source de lumière à large bande (9).

**6.** Dispositif selon l'une des revendications 1 à 5, **caractérisé en ce qu'**un spectromètre Raman, un spectromètre à fluorescence ou un spectromètre d'absorption ou d'émission pour la lumière visible, ou pour les rayons IR, UV ou X est prévu comme système de détection (10).

**7.** Dispositif selon l'une des revendications 1 à 6, **caractérisé en ce que** l'échantillon sous forme de gaz ou de vapeur comportant l'analyte à déterminer fait partie d'un gaz protecteur ou de l'air.

**8.** Procédé pour l'augmentation de la sensibilité d'une mesure spectroscopique et ainsi l'abaissement de la limite d'identification et de détermination d'un analyte dans un échantillon sous forme de gaz ou de vapeur au moyen d'un dispositif ; lequel comprend

- une source de lumière (9),
- un espace de mesure d'échantillon (5) stable en pression, pourvu d'ouvertures d'entrée et de sortie réglables, pour la réception de l'échantillon, lequel espace de mesure d'échantillon est traversé par la lumière de la source de lumière (9),
- un système de détection (10) équipé d'optiques d'entrée et/ou de sortie ou d'autres moyens optiques ou optoélectroniques réglables (7, 8), lequel système de détection est capable d'analyser par spectrométrie la lumière transmise, réfléchie ou émise dans l'espace de mesure d'échantillon (5),
- des dispositifs pour la saisie et l'évaluation automatiques des données de mesure (11), ainsi que
- un dispositif de compression qui est raccordé à une ouverture d'entrée de l'espace de mesure d'échantillon (5),

**caractérisé en ce que** le dispositif de compression comprend un compresseur (3) et au moins un réservoir de collecte ou de stockage (3), et **que** l'échantillon de l'analyte sous forme de gaz ou de vapeur provenant d'un environnement de traitement (1) est introduit dans le récipient de collecte ou de réserve (2) et est enrichi à l'aide du compresseur (3) avec une pression sélectionnable préréglée en étant comprimé et, après l'enrichissement, est transféré de manière ciblée, réglable et sous forme concentrée dans l'espace de mesure d'échantillon (5) par l'intermédiaire de soupapes mécaniques ou électroniques et est analysé par spectroscopie.

**9.** Procédé selon la revendication 8, **caractérisé en ce que** la concentration de l'échantillon enrichi est modifiée par une modification de pression ciblée par l'intermédiaire du dispositif de compression (3) avant son transfert dans l'espace de mesure d'échantillon (5) jusqu'à ce que la limite d'identification ou de détermination de l'analyte soit atteinte et que l'analyte puisse ainsi être déterminé.

**10.** Procédé selon la revendication 9, **caractérisé en ce que** la plage de travail de la mesure spectroscopique est déterminée pour l'analyte dans l'échantillon et pour le système de mesure sélectionné et les conditions de mesure sélectionnées en trouvant la concentration maximale supérieure et inférieure de l'analyte.

**11.** Procédé selon l'une des revendications 8 à 10, **caractérisé en ce qu'**un espace de mesure d'échantillon (5) est utilisé, lequel est réalisé sous forme de cellule de mesure tubulaire d'une longueur définie allant de 3 à 300 cm et qui convient pour des pressions allant de 10 kPa à au moins 200 MPa.

**12.** Procédé selon l'une des revendications 8 à 11, **caractérisé en ce qu'**une source de lumière (9) et un système de détection (10) comportant des fibres optiques (7, 8) sont utilisés.

**13.** Procédé selon l'une des revendications 8 à 12, **caractérisé en ce qu'**une lumière comportant une gamme de longueurs d'onde allant de 160 à 35 000 nm est utilisée comme source de lumière à large bande (9).

**14.** Procédé selon l'une des revendications 8 à 13, **caractérisé en ce qu'**un spectromètre Raman, un spectromètre à fluorescence ou un spectromètre d'absorption ou d'émission pour la lumière visible, ou pour les rayons IR, UV ou X est utilisé comme système de détection (10).

**15.** Procédé selon l'une des revendications 8 à 14, **caractérisé en ce que** l'échantillon sous forme de gaz ou de vapeur comportant l'analyte à déterminer fait partie d'un gaz protecteur ou de l'air.

## FIG. 1

## FIG. 2

(a)

(b)

(c)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 200127596 A1
- US 20030098419 A1
- US 20030015019 A1
- DE 202022000633 U1
- WO 0127596 A1
- US 2011147592 A1
- DE 202012003739 U1